# EUROPÄISCHE PATENTSCHRIFT

(11) **EP 0 808 414 B1**
(45) Veröffentlichungstag und Bekanntmachung des Hinweises auf die Patenterteilung: **25.11.1998**
(21) Anmeldenummer: 96902226.8
(22) Anmeldetag: 10.02.1996
(51) Int. Cl.: F01N 3/02

(54) **ABGASREINIGUNGSVORRICHTUNG FÜR VERBRENNUNGSKRAFTMASCHINEN**
EXHAUST GAS PURIFICATION DEVICE FOR INTERNAL COMBUSTION ENGINES
DISPOSITIF D'EPURATION DES GAZ D'ECHAPPEMENT POUR MOTEURS A COMBUSTION INTERNE

(30) Priorität: 10.02.1995 DE 19504450
(43) Veröffentlichungstag der Anmeldung: 26.11.1997
(73) Patentinhaber: Gamel, Florian, 80796 München (DE)
(72) Erfinder: GAMEL, Florian, D-80796 München (DE); KANY, Siegfried, D-79801 Hohentengen (DE)
(74) Vertreter: Söffge, Karen
(86) Internationale Anmeldenummer: DE9600218
(87) Internationale Veröffentlichungsnummer: WO9624755

(56) Entgegenhaltungen:
- DE-A- 3 731 766
- DE-A- 4 305 915
- DE-U- 9 313 112

## Beschreibung

Die Erfindung bezieht sich gemäß des Oberbegriffs des Anspruchs 1 auf eine Abgasreinigungsvorrichtung für Verbrennungskraftmaschinen, die insbesondere für Dieselmotoren in Kraftfahrzeugen, Notstromgruppen, Baumaschinen und Dieselloks eingesetzt werden, bei denen der Rußpartikelausstoß einer Nachverbrennung unterzogen wird, so daß die Menge der ausgestoßenen Rußpartikel drastisch vermindert wird.

Derartige Vorrichtungen bzw. Verfahren zur Reduzierung des Rußpartikelausstoßes mit Hilfe einer Abgasnachbehandlung mit Keramikfiltern ist im Stand der Technik aus den Druckschriften DE 93 13 112.7 und der DE 37 31 766 bekannt. Aus der DE 93 13 112.7 ist bekannt, den Kraftstoff mittels einer Dosiereinrichtung mit einem katalytischen flüssigen Additiv zu versetzen, um damit die Zündtemperatur der Rußpartikel in der Nachverbrennung zu erniedrigen, wodurch das Filtermaterial regeneriert wird. Das flüssige Additiv bewirkt eine exotherme chemische Reaktion mit den Rußpartikeln, so daß praktisch eine Erniedrigung der Zündtemperatur der Rußpartikel bewirkt wird.

Monolithische Keramikfilter haben sich in der Vergangenheit als nicht sehr vorteilhaft auf die Betriebszeit des Filters ausgewirkt, da sie nach kurzer Zeit durch plötzliche Überhitzung infolge thermischer Spannungen zerbrachen.

Weitaus günstiger scheinen da sogenannte Gewebefilter, wie sie aus der DE 37 31 766 bekannt sind, die im Prinzip aus einer Vielzahl zusammengefügter Keramikfäden bestehen. Diese Filterart ist in ihrem Gesamtverhalten elastischer und halten dadurch möglichen auftretenden thermischen Spannungen besser stand. Die aus dem Motor austretenden Rußpartikel werden von dem Keramikgeflecht aufgefangen und aufgrund der Erniedrigung der Verbrennungstemperatur durch das zugeführte Additiv setzt der Regenerationsprozeß des Filters bereits bei ca. 320°C ein, die praktisch kurz nach dem Start des Motors am Filter erreicht werden. Somit ist zur Regeneration des Filters keine weitere Maßnahme oder Vorrichtung notwendig, um die zündtemperatur in Gang zu setzen. Zusätzliche Filterregenerations-Vorrichtungen sind verhältnismäßig teuer und erfordern außerdem einen erheblichen Aufwand an zuzuführender Energie, die die gesamte Anlage unwirtschaftlich machen.

Die bisher bekannten, aus einem Keramikgarn gewebten oder gewirkten Keramikfilter, haben allesamt den entscheidenden Nachteil, daß sie ihre anfangs eingestellte Dichte des Materials im Hohlkörper des Filters während des Betriebs über einen längeren Zeitraum nicht beibehalten können, da sie in sich zusammenrutschen. Versuche, dem Filtergewebe eine gewisse Stabilität durch Einfügen von Stahlnetzen in das Gewebe hatten nur einen mäßigen Erfolg, da die jeweiligen Standzeiten der Filter für einen Dauerbetrieb nicht ausreichen.

Ausgehend vom oben genannten Stand der Technik liegt daher der vorliegenden Erfindung die Aufgabe zugrunde, einen Rußfilter für Verbrennungskraftmaschinen bereitzustellen, der in der Lage ist, eine innere mechanische Stabilität bei hoher mechanischer Beanspruchung zu gewährleisten.

Diese Aufgabe wird erfindungsgemäß mit den kennzeichnenden Merkmalen der unabhängigen Hauptansprüche gelöst.

Die erfindungsgemäße Vorrichtung zur Minderung der Menge der austretenden Rußpartikel bei Verbrennungskraftmaschinen, denen dem Kraftstoff ein katalytisches Additiv zugeführt wird, insbesondere bei Diesel-Verbrennungskraftmaschinen, bestehend aus einem Behälter mit einem Gasein- und Gasaustrittsstutzen und einem Hohlkörper, dessen Wandungen eine Vielzahl von Durchbrüchen aufweisen und am Ende geschlossen ist und teilweise mit einem Gestrick aus Filtermaterial gefüllt ist ist dadurch gekennzeichnet, daß das Filtermaterial eine Mehrzahl von Keramik-Paketen aufweist, wobei die Keramik-Pakete von einem Ende her aufgerollte gestrickte Schläuche aus hochfeinen Keramikfäden sind, die von einem warmfesten Draht begleitet sind, wobei die Maschenweite des Schlauches ca. 4,5 mm und die Teilung ca. 5 mm beträgt.

Das erfindungsgemäße Verfahren zur Herstellung der Keramik-Pakete ist dadurch gekennzeichnet, daß durch ein Ende des Strickschlauches ein ca. 4 mm dicker Draht mit einer Vielzahl von Widerhaken gezogen wird, die sich in dem Gestrick verhaken und der Draht mit einem Antrieb um seine Längsachse gedreht wird, bis der Strickschlauch aufgerollt ist. Anschließend werden die so hergestellten aufgerollten Strickschläuche als Kermik-Pakete vorteilhaft in einen Hohlkörper eingelegt und mit Hilfe eines Stempels mit 2 kg pro cm² verdichtet, so daß das Keramikgewicht der Keramik-Pakete auf 500 mm Länge bei einem Innendurchmesser von 38 mm des Hohlkörpers ca. 850 g beträgt.

In einer vorteilhaften Ausführungsform befindet sich in dem Behälter mit einem Ein- und Auslaßstutzen ein Hohlkörper, der die gestrickten Keramik-Pakete aufnimmt. Der Hohlkörper ist ein Zylinder, dessen Wandungen eine Vielzahl von Durchbrüchen für den Durchtritt des Gases aufweisen. Dabei ist es für die vorliegende Erfindung unerheblich, ob das Gas von außen nach innen oder von innen nach außen durch den Filter hindurchtritt. Die erfindungsgemäßen Keramik-Pakete werden in vorteilhafter Weise aus gestrickten Schläuchen hergestellt, die von einem Ende her zu einem wulstartigen Ring aufgerollt werden.

Erfindungsgemäß bestehen die zum Stricken verwendeten Keramik-garne aus hochfeinen Keramik-Filamenten, mit einem Durchmesser von ca. 6 µm, wobei das fertige Garn einen Durchmesser von ca. 1 mm aufweist und texturiert und gezwirnt ist.

Von entscheidender Bedeutung für die vorliegende Erfindung ist es, daß parallel zum Garn ein warmfester Draht gezogen ist, der vorteilhaft aus einem VA-Stahl hergestellt sein sollte. Der Durchmesser dieses Stahldrahtes beträgt ca. 0,2 mm. Außerordentlich vorteilhaft für die vorliegende Erfindung ist es, daß der VA-Stahldraht jede einzelne Masche des Gestricks, d.h. des Strickschlauches durchläuft. Dadurch wird dem gesamten Keramik-Paket eine innere Elastizität verliehen, die eine nachträgliche Verdichtung des Gestricks bzw. der Keramik-Pakete verhindert.

Ferner ist es vorteilhaft für den erfindungsgemäßen Filter, die Machenweite auf ca. 4,5 mm und die Teilung des Gestricks auf ca. 5 mm bei einer Rechts-Links-Bindung zu wählen.

Die äußerst vorteilhafte chemische Zusammensetzung des verwendeten Keramik-Garns ist wie folgt:
- 93,5% ≤ SiO₂
- 4,0% = Al₂O₃
- 0,8% ≥ Na₂O
Dieses als Hakotherm-1200 bekannte Produkt hat sich derzeit im praktischen Versuch bei ca. 100.000 km Fahrleistung eines PKWs mit Dieselmotor bewährt. Das verwendete Keramikmaterial weist eine Hitzebeständigkeit bis zu 1.200°C auf.

In vorteilhafter Weise wird mit Hilfe einer elektronisch gesteuerten Dosiereinrichtung das eisenhaltige Additiv dem Treibstoff vor der Verbrennungskraftmaschine zugeführt. Selbstverständlich können auch andersartige Additive, die kein Eisen enthalten, für die vorliegende Erfindung von Vorteil sein, ohne hier explizit genannt zu werden.

Das vorteilhafte erfindungsgemäße Verfahren zur Herstellung der Keramik-Pakete ist dadurch gekennzeichnet, daß durch den Umfang des einen Endes des Strickschlauches ein ca. 4 mm dicker Draht mit einer Vielzahl von Widerhaken gezogen wird, die sich in dem Gestrick bei Drehung des Drahtes um seine Längsachse verhaken und dadurch den vorgefertigten Strickschlauch bis zu seinem anderen Ende vollständig aufrollen.

Weitere erfindungsgemäße Merkmale sind den Unteransprüchen zu entnehmen.

Im nun folgenden wird die vorliegende Erfindung anhand von Zeichnungen im Detail erläutert. Es zeigt:
- Fig. 1: ein Blockschaltbild der gesamten Vorrichtung zur Minderung des Rußausstoßes aus der Abgasleitung einer Verbrennungskraftmaschine (2);
- Fig. 2: den prinzipiellen Aufbau eines Behälters (3) mit dem darin befindlichen erfindungsgemäßen Hohlkörper (4) und den erfindungsgemäßen Keramik-Paketen (9);
- Fig. 3: eine prinzipielle Schnittdarstellung eines Teils des Hohlkörpers (4) mit den erfindungsgemäßen verdichteten und unverdichteten Keramik-Paketen (9, 10);
- Fig. 4: einen Ausschnitt aus dem Gestrick mit dem erfindungsgemäßen Keramik-Garn (12) zusammen mit dem erfindungsgemäßen Metall-Draht (13);

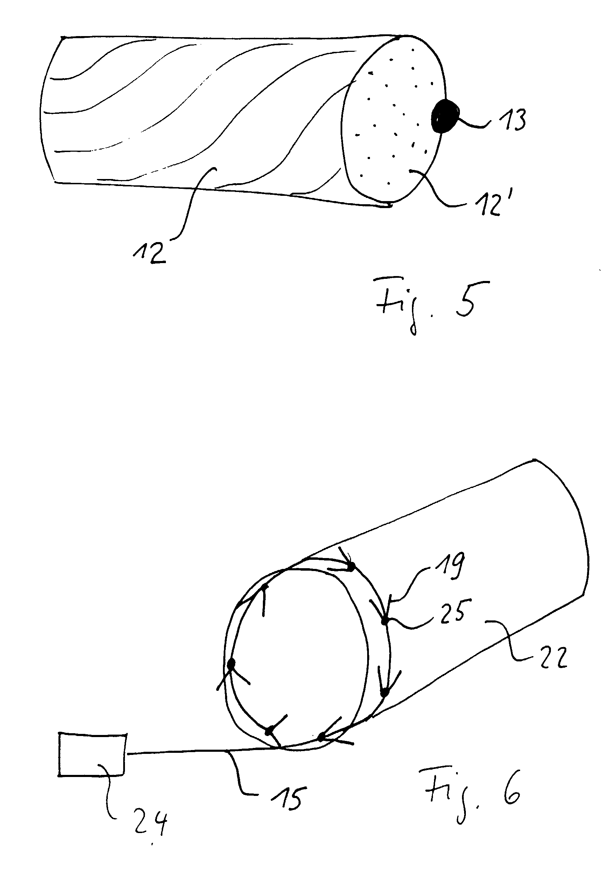

- Fig. 5: eine perspektivische Schnittdarstellung eines Teils des Kermaik-Garns (12) mit dem erfindungsgemäßen Metall-Draht (13);
- Fig. 6: eine Prizipdarstellung eines Werkzeugs zur Herstellung des Keramik-Pakets (9);
- Fig. 7: eine Prinzipdarstellung des Hohlkörpers (4) mit einer erfindungsgemäßen Vorrichtung (17, 18) zum Einführen der Keramik-Pakete (9).

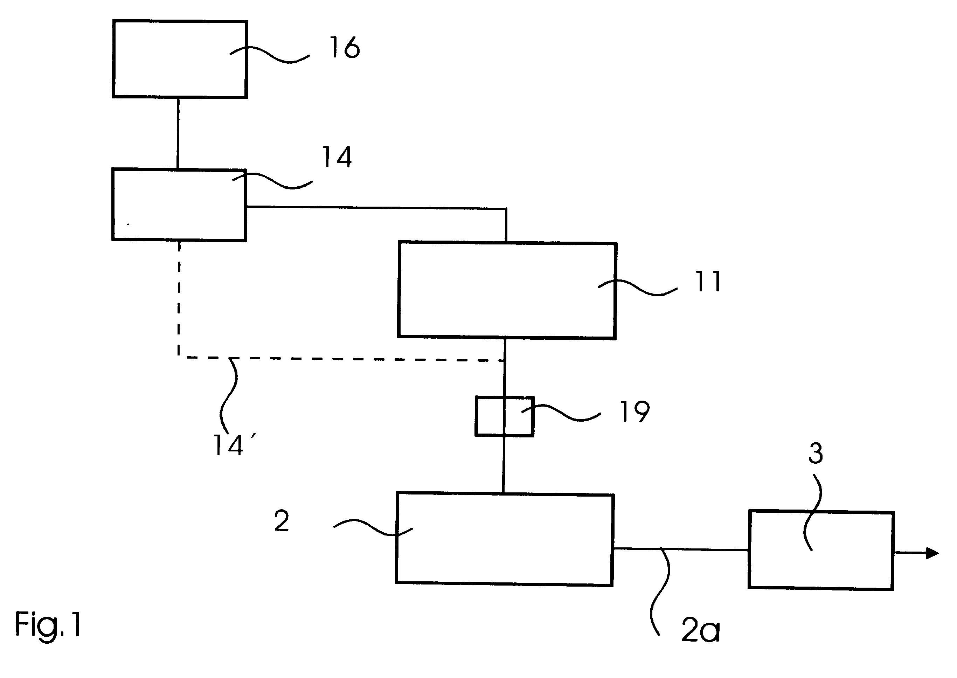

Fig. 1 zeigt ein Blockschaltbild der gesamten Vorrichtung zur Minderung des Rußausstoßes aus einer Verbrennungskraftmaschine 2. Die Vorrichtung ist insbesondere bei Diesel-Verbrennungskraftmaschinen wirksam und effektiv, da hierbei der Ausstoß der Rußpartikel verhältnismäßig groß ist. Die in der Verbrennungskraftmaschine 2 erzeugten Rußpartikel gelangen über eine Leitung 2b in den erfindungsgemäßen Behälter 3, der anstelle des sonst üblichen Schalldämpfers im Abgassystem angeordnet ist. In dem Behälter 3 werden die austretenden Rußpartikel für eine kurze Zeit zwischengelagert, bis sie ihre Verbrennungstemperatur erreicht haben.

Im einfachsten Falle befindet sich das katalytische Additiv zur Erniedrigung der Zündtemperatur der Rußpartikel bereits im Treibstoff, der im Treibstofftank 11 aufbewahrt wird. Als Additive kommen Schwermetalle, wie Kupfer, Nickel und Cobalt, in Frage, die die Zündtemperatur am stärksten herabsetzen. Diese Metalle scheiden jedoch aus Gründen der Umweltbedenklichkeit von vornherein aus. Ferner sind Seltene Erden als katalytisch wirkende Metalle bekannt, deren Umweltbedenklichkeit jedoch nicht in vollem Umfang bisher erforscht wurde. Dagegen erscheint Eisen, das ebenfalls die Zündtemperatur der Rußpartikel beträchtlich auf ca. 320 bis 350°C herabsetzt und darüber hinaus als für die Umwelt unbedenklich angesehen wird, als geeignete Wirksubstanz für das entsprechende Additiv. Um die speziellen Dieselkraftstoffspezifikationen bei Verbrennungskraftmaschinen einzuhalten, wurde bisher eine organische Eisenverbindung in einem dieselählichen Lösungsmittel entwickelt und als Additiv im Versuch bereits erfolgreich erprobt. Die Additivkonzentrationen können als sehr gering angesehen werden und betragen bei einem Mittelklassewagen etwa 3 bis 4 1 auf 100.000 km. Das zeigt, daß die zur Regeneration des Partikelfilters benötigten Additivmengen äußerst gering sind.

Das Additiv wird mit Hilfe einer Dosiervorrichtung 14 aus dem Additivtank 16 entnommen und in den Treibstofftank 11 eingeleitet. Über die bei Diesel-Verbrennungskraftmaschinen notwendige Einspritzpumpe 19 gelangt dann das Treibstoffgemisch aus Diesel und Additiv in die Verbrennungskammern des Motors 2.

Prinzipiell kann auch das Additiv direkt über einen Bypass 14b vor der Einspritzpumpe 19 der Treibstoffzulaufleitung zugeführt werden. Die Dosiervorrichtung 14 ist mit einem speziellen, hier nicht gezeigten, Dosierventil ausgerüstet, das elektronisch angesteuert wird.

Bei der Verbrennung des Treibstoffs in der Verbrennungskraftmaschine 2 entstehen verhältnismäßig große Mengen an Rußpartikeln, die es unter allen Umständen gilt zu vermindern, da sie vermutlich stark karzinogen auf den lebenden Organismus wirken.

Wie bereits weiter oben erwähnt, gelangen die Rußpartikel aus der Verbrennungskraftmaschine 2 über die Abgasleitung 2a in den Behälter 3, in dem sich der erfindungsgemäße Rußpartikelfilter befindet.

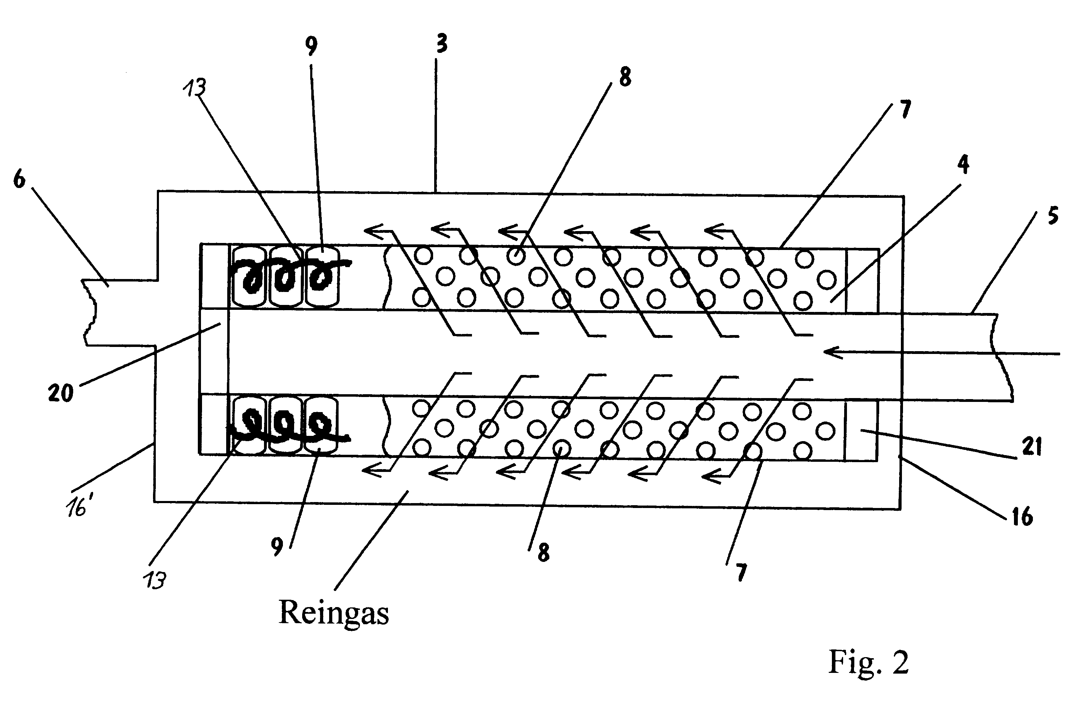

In Fig. 2 ist der prinzipielle Aufbau des Behälters 3 mit dem darin befindlichen erfindungsgemäßen Hohlkörper 4 gezeigt. Die aus der Verbrennungskraftmaschine 2 kommenden Rußpartikel treten mit dem Gas in den Gaseintrittsstutzen 5 in den Behälter 3 ein. Der Gaseintrittsstutzen 5 ist in vorteilhafter Weise konzentrisch zum Behälter 3 angeordnet, wenn dieser Behälter 3 zylindrisch ausgeführt ist. Die Stirnflächen 16 und 16' sind in der Regel flach ausgeführt, sie können jedoch auch eine konische verjüngende Übergangsform annehmen.

Der Behälter 3 wird anstelle des sonst üblichen Schalldämpfers in das Abgassystem der Verbrennungskraftmaschine 2 eingesetzt. In der hier vorliegenden Ausführungsform befindet sich der Hohlkörper 4 konzentrisch zum Behälter 3 und zum Gaseintrittstutzen 5. Der Hohlkörper 4 besteht aus einem Zylinder, dessen Mantelfläche 7 eine Vielzahl von Durchbrüchen 8 aufweist. Die Deckflächen des Hohlkörpers 4 sind an den Enden mit einem flachen Deckel 20 und 21 verschlossen, wobei der Deckel 21 eine Öffnung für den Gaseintrittsstutzen 5 aufweist.

Das rußpartikelhaltige Abgas tritt durch den Gaseintrittsstutzen 5 in des Innere des Hohlkörpes 4 ein und wird infolge des sich aufbauenden Druckes durch das Filtermaterial gedrückt, wobei die im Abgas befindlichen Rußpartikel zu über 90% herausgefiltert werden.

Um den Differenzdruck im Inneren des Hohlkörpers 4 nicht unverhältnismäßig hoch ansteigen zu lassen, ist es daher notwendig, die Beschaffenheit des Filtermaterials entsprechend auszuwählen. Hierin liegt die eigentliche Schwierigkeit und Aufgabe der vorliegenden Erfindung, nämlich ein Filtermaterial bereitzustellen, das sowohl einen verhältnismäßig niedrigen Differenzdruck als auch eine vernünftige Filterwirkung der Rußpartikel gewährleistet.

Am linken Ende des Hohlkörpers 4 sind die erfindungsgemäßen Keramik-Pakete 9 symbolisch dargestellt. Ebenfalls symbolisiert ist der erfindungsgemäße Metalldraht 13 gezeigt, der sich durch das gesamte Gestrick hindurchzieht. Der Aufbau der erfindungsgemäßen Keramik-Pakete 9 wird weiter unten im Detail erläutert. Der Hohlzylinder 4 beinhaltet eine Vielzahl dieser erfindungsgemäßen Keramik-Pakete 9, die auf eine vorgegebene Dichte mittels mechanischen Drucks verdichtet werden.

Die an den Oberflächen der Keramik-Garne 12 der Keramik-Pakte 9 ausgefilterten Rußpartikel erreichen bereits nach einer kurzen Anlaufzeit des Motors 2 die geforderte Zündtemperatur von etwa 320 bis 350°C, so daß ein rasches Abbrennen der Rußpartikel bereits bei niedrigen Temperaturen stattfindet, wodurch die notwenige Regeneration des Tiefenfilters bewirkt wird.

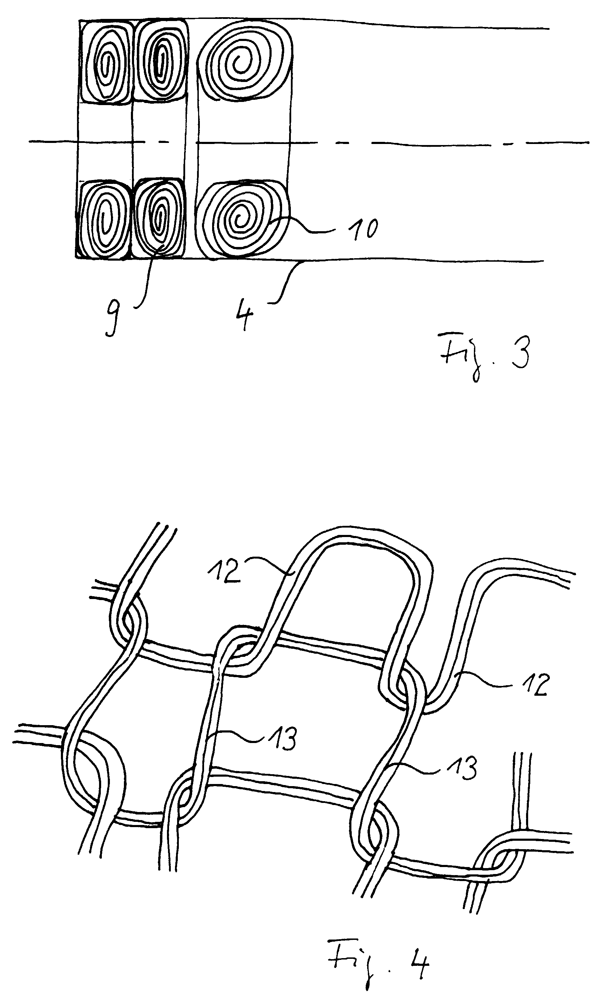

In Fig. 3 ist ausschnittsweise ein Teil des Hohlkörpers 4 in einer Schnittdarstellung wiedergegeben. Diese Darstellung verdeutlicht, wie die erfindungsgemäßen Keramik-Pakete 9 im eingebauten Zustand im Hohlkörper 4 gelagert und gehalten werden. Aus der Darstellung ist ferner ersichtlich, daß das einzelne Keramik-Paket 9, 10 aus einem von einem Ende her aufgerollten gestrickten Schlauch 22 aus einem speziellen Keramikgarn hergestellt ist. Das Keramik-Paket 10 stellt das ungepreßte, unverformte und somit nicht verdichtete Filtermaterial in seinem Urzustand dar.

Wie bereits erwähnt besteht das erfindungsgemäße Keramik-Paket 9, 10 aus einem aufgerollten länglichen Schlauch 22, der in einer bestimmten Strickart zylindrisch gestrickt ist. Das Gestrick besteht aus einer Rechts-Links-Bindung mit einer Maschenweite (a) zwischen 4,5 und 7,5 mm und einer Teilung von etwa 5, wie dies in Fig. 4 dargestellt ist. Diese Art der Bindung und der Maschenweite hat sich bei Langzeitversuchen als die günstigste Art des Gestricks herausgestellt, da sie den geforderten notwendigen Differenzdruck im Abgassystem bei entsprechender Verdichtung gewährleistet. Hierzu trägt entscheidend der bei jeder einzelnen Masche mit durchzogene Metalldraht 13 bei, der einerseits die notwendige Elastizität des gesamten Keramik-Pakets 9 ermöglicht und andererseits ein allmähliches Verdichten des Gestricks verhindert, wodurch die lange Standzeit des Rußfilters gewährleistet wird.

Das für die Strickung des Schlauches verwendete spezielle Garn 12 besteht aus hochfeinen Keramik-Filamenten 12' mit einem mittleren Durchmesser von etwa 6 µm, der mit der handelsüblichen Bezeichnung Hakotherm-1200 im Handel erhältlich ist. Die chemische Zusammensetzung dieser keramischen Filamente setzt sich wie folgt zusammen:
93,5% ≤ SiO₂
4% = Al₂O₃
0,8% ≥ Na₂O.

Dieses Keramikmaterial hat eine besonders hohe Dauertemperaturbeständigkeit, die oberhalb von 1.000°C liegt. Ferner ist dieses Material gegen die meisten Chemikalien resistent, mit Ausnahme von Fluß- und Phosphorsäure und starken Laugen. Diese Keramik-Filamente sind darüber hinaus hautfreundlich und gesundheitlich unbedenklich.

Das Garn 12 setzt sich also aus einer Vielzahl von feinen Keramik-Filamenten 12' zusammen, die texturiert und gezwirnt sind.

Neben oder im Querschnitt des Garns 12 ist der erfindungsgemäße Metalldraht 13 untergebracht, der jede einzelne Masche des Gestricks des Schlauches durchzieht. In der vorliegenden Ausführung besteht der Metalldraht aus einem V4A-Stahl, der einerseits warmfest ist und andererseits eine ausreichende federnde Wirkung aufweist.

Fig. 6 zeigt eine Vorrichtung zur Herstellung des erfindungsgemäßen Keramik-Pakets 9, 10 aus einem länglich gestrickten Schlauch 22. Das Werkzeug besteht aus einem Draht 15, der auf den letzten Zentimetern (10 bis 15 cm) Widerhaken 19 aufweist, die mit einem sogenannten Flexgelenk 25 an dem etwa 4 mm dicken Draht 15 befestigt sind. Das Ende des Drahtes mit den Widerhaken wird an einem Ende des Keramik-Gestrick-Schlauchs auf dem gesamten Umfang des Schlauchs 22 eingefädelt und dann mit einem nicht näher zu beschreibenden Antrieb 24 in Drehung versetzt. Infolge der Fliehkraft der Widerhaken, die nur an einem Ende mit dem Flexgelenk 25 mit dem Draht 15 verbunden sind, verhaken sich die Widerhaken in dem Gestrick und rollen somit den Schlauch 22 vollständig zu einer Wulst, dem sogenannten Keramik-Paket 9 auf.

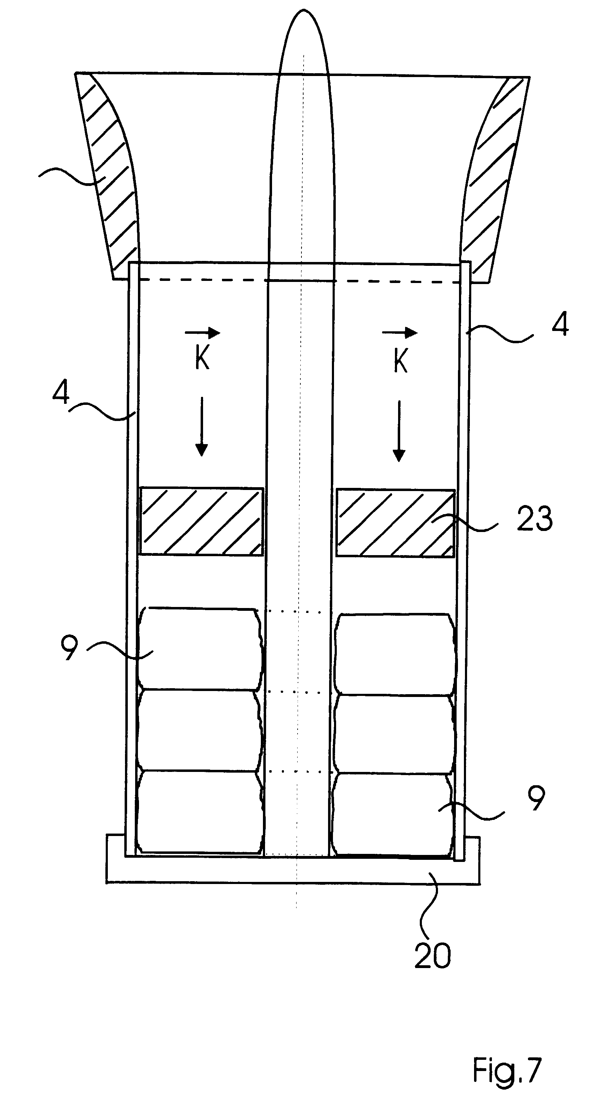

Das fertige Paket 9 bzw. 10 wird dann mit Hilfe einer speziellen Vorrichtung in den Hohlkörper 4 eingebracht, wie dies in Fig. 7 dargestellt ist. Auf den äußeren Rand des Hohlkörpers 4 wird am offenen Ende ein passender Ring 17 aufgesetzt, der im Längsschnitt die Form eines Trichters aufweist. In der Mitte des Hohlkörpers 4 befindet sich ein Dorn 18, der etwa den Innendurchmesser der oben beschriebenen Keramik-Pakete 9, 10 hat. Die vorgefertigten Keramik-Pakete 10 können entweder von Hand oder maschinell in den Hohlkörper 4 eingelegt werden. Nach einer bestimmten Anzahl von Keramik-Paketen 10 erfolgt mit Hilfe eines Stempels 23 die bereits oben erwähnte Verdichtung des Filtermaterials auf ein Maß, das jeweils dem Verwendungszweck angepaßt ist. Der mechanische Druck liegt etwa bei 2 kg pro cm² für ein Filter mit äußerem Durchmesser von 38 mm. Das reine Keramikgewicht beträgt ca. 850 g bei einer Länge von 500 mm.

## Patentansprüche

1. Vorrichtung zur Minderung der Menge der austretenden Rußpartikel bei Verbrennungskraftmaschinen (2), denen dem Kraftstoff ein katalytisches Additiv zugeführt wird, insbesondere bei Diesel-Verbrennungskraftmaschinen, bestehend aus einem Behälter (3) mit einem Gasein- und Gasaustrittsstutzen (5, 6) und einem Hohlkörper (4), dessen Wandungen (7) eine Vielzahl von Durchbrüchen (8) aufweisen und am Ende (20) geschlossen ist und teilweise mit einem Gestrick aus Filtermaterial gefüllt ist, **dadurch gekennzeichet,** daß das Filtermaterial eine Mehrzahl von Keramik-Paketen (9) aufweist, wobei die Keramik-Pakete (9) von einem Ende her aufgerollte gestrickte Schläuche (22) aus hochfeinen Keramikfäden (12') sind, die von einem warmfesten Draht (13) begleitet sind, wobei die Maschenweite des Schlauches (22) ca. 4,5 mm und die Teilung ca. 5 mm beträgt.

2. Vorrichtung nach Anspruch 1, **dadurch gekennzeichnet**, daß der Behälter (3) und der Hohlkörper (4) konzentrisch zueinander angeordnet sind, wobei der Hohlkörper (4) doppelwandig ist, um die Keramik-Pakete (9) aufzunehmen.

3. Vorrichtung nach Anspruch 1, **dadurch gekennzeichnet**, daß der Gaseintrittsstutzen (5) konzentrisch zum Behälter (3) angeordnet ist.

4. Vorrichtung nach Anspruch 1, **dadurch gekennzeichnet**, daß die aufgerollten Keramik-Pakete (9) mit 2 kg pro cm² verdichtet sind, so daß das Keramikgewicht der Keramik-Pakete (9) auf 500 mm Länge bei einem Innendurchmesser von 38 mm. des Hohlkörpers (4) 850 g beträgt.

5. Vorrichtung nach Anspruch 1, **dadurch gekennzeichnet,** daß die zum Stricken verwendeten Keramikgarne (12') aus hochfeinen, z.B. 6 µ, Keramik-Filamenten (12') gebildet sind, wobei das Garn (12) einen Durchmesser von ca. 1 mm aufweist und texturiert und gezwirnt ist.

6. Vorrichtung nach Anspruch 1, **dadurch gekennzeichnet,** daß die Maschen des Strickschlauches (22) eine Rechts-Links-Bindung aufweist.

7. Vorrichtung nach Anspruch 1 und 5, dadurch gekennzeichnet, daß die chemische Zusammensetzung des Filtermaterials aus
- 93,5% ≤ SiO₂
- 4,0% = Al₂O₃
- 0,8% ≥ Na₂O
besteht.

8. Vorrichtung nach Anspruch 1, **dadurch gekennzeichnet**, daß der warmfeste Draht ein V4A-Stahl ist.

9. Vorrichtung nach einem der vorangegangenen Ansprüche, **dadurch gekennzeichnet,** daß das hitzebeständige Keramikgestrick eine Temperaturfestigkeit bis zu 1200°C aufweist.

10. Vorrichtung nach Anspruch 1, **dadurch gekennzeichnet,** daß das Additiv eisenhaltig ist und die Zündtemperatur der Rußpartikel auf 300 bis 350°C erniedrigt.

11. Vorrichtung nach Anspruch 1, **dadurch gekennzeichnet**, daß das Additiv mittels einer Pumpeneinrichtung (12) dem Kraftstoff (Diesel) zugeführt wird.

12. Vorrichtung nach Anspruch 11, dadurch gekennzeichnet, daß die Pumpeneinrichtung (12) elektronisch angesteuert wird.

13. Vorrichtung nach Anspruch 1, **dadurch gekennzeichnet**, daß der Hohlkörper (4) als Steckfilter ausgebildet ist.

14. Verfahren zur Herstellung der Keramik-Pakete (9) gemäß Anspruch 1, **dadurch gekennzeichnet**, daß durch ein Ende (23) des Strickschlauches (22) ein ca. 4 mm dicker Draht (15) mit einer Vielzahl von Widerhaken gezogen wird, die sich in dem Gestrick verhaken und der Draht (15) mit einem Antrieb (24) um seine Längsachse gedreht wird, bis der Strickschlauch (22) aufgerollt ist.

15. Verfahren nach Anspruch 14, **dadurch gekennzeich**net, daß die Widerhaken (19) jeweils ein Scharnier (25) an einem Ende aufweisen.

16. Verfahren zur Füllung eines Hohlkörpers (4) mit Keramik-Pakete (9) **dadurch gekennzeichnet,** daß die Keramik-Pakete (9) aus aufgerollten Strickschläuchen (22) aus Keramik fäden (12') begleitet von einem warmfesten Draht (13) in den Hohlkörper (4) eingelegt werden und mit Hilfe eines Stempels (23) mit 2 kg pro cm² verdichtet werden, so daß das Keramikgewicht der Keramik-Pakete (9) auf 500 mm Länge bei einem Innendurchmesser von 38 mm des Hohlkörpers (4) 850 g beträgt.

## Claims

1. Device for reducing the amount of soot particles existing from internal combustion engines (2), whereby a catalytic additive is added to the fuel, particularly in connection with Diesel internal combustion engines, consisting of a container (3) with a gas inlet and gas outlet pipe (5, 6) and a hollow body (4), which walls (7) have a great number of breakthroughs (8) and is closed at the end (20) and where the hollow body (4) is partly filled with a knitting made of filter material, **characterized in that** the filter material consists of a number of ceramic packets (9) whereby the ceramic packets (9) are knitted tubes (22) made of extremely fine ceramic filaments (12'), said tubes (22) being rolled up from one end, and said ceramic filaments being accompanied with a heat-resistant wire (13), whereby the mesh width of the tube (22) is about 4,5 mm and the division of about 5 mm.

2. Device according to claim 1, **characterized in that** the container (3) and the hollow body (4) is arranged concentrically to each other, whereby the hollow body (4) is double-walled, in order to take in the ceramic packets (9).

3. Device according to claim 1, **characterized in that** the gas inlet pipe (5) is arranged concentrically with respect to the container (3).

4. Device according to claim 1, **characterized in that** the rolled-up ceramic packets (9) are compressed with 2 kg/cm², so that the ceramic weight of the ceramic packets (9) over 500 mm length at an inside diameter of 38 mm of the hollow body (4) amounts to 850 g.

5. Device according to claim 1, **characterized in that** the ceramic yarns (12') used for knitting are formed by extremely fine (6 µ) ceramic filaments (12'), whereby the yarn (12) has a diameter of about 1 mm and is textured and twisted.

6. Device according to claim 1, **characterized in that** the measures of the knitted tube (22) has a right-left knitting pattern.

7. Device according to claims 1 and 5, **characterized in that** the chemical composition of the filter materil is as follwos:
- 93.5% ≤ SiO₂
- 4.0% = Al₂O₃
- 0.8% ≥ Na₂O

8. Device according to claim 1, **characterized in that** the heat-resistant wire is made of V4A-grade steel.

9. Device according to any one of the preceding claims, **characterized in that** the thermally resistant ceramic knitting has a heat resistance of up to 1200°C.

10. Device according to claim 1, **characterized in that** the additive contains iron and lowers the ignition temperature of the soot particles to 300° to 350°C.

11. Device according to claim 1, **characterized in that** the additive is supplied to the fuel (Diesel) by means of a pump device (12).

12. Device according to claim 11, **characterized in that** the pump device (12) is controlled electronically.

13. Device according to claim 1, **characterized in that** the hollow body (4) is designed as a plug filter.

14. Process for producing the device according to claim 1, **characterized in that** a wire (15) of about 4 mm thickness with a great number of barbs is pulled through one end (23) of the knitted tube (22), said barbs getting hooked in the knitting, and the wire (15) is turend with a drive (24) around its longitudinal axis until the knitted tube (22) is rolled up.

15. Process according to claim 14, **characterized in that** the barbs (19) each have a hinge (25) at one end.

16. Process for filling-up a hollow body (4) with ceramic packets (9), **characterized in that** the ceramic packets (9) from rolled-up knitted tubes (22) made from ceramic filaments (12') accompanied with a heat-resistant wire (13) in the hollow body (4) are inserted with the help of a punch (23) at 2 kg/cm² and compressed, so that the ceramic weight of the ceramic packets (9) over 500 mm length at an inside diameter of 38 mm of the hollow body (4) amounts to 850 g.

## Revendications

1. Dispositif d'épuration des gaz d'échappement pour moteurs à combustion interne (2), dont on a ajouté au carburant un additif catalytique, en particulier pour des moteurs à combustion diesel, composés d'un réservoir (3) avec un manchon pour l'entrée et la sortie de gaz (5, 6) et d'un corps creux (4) dont les cloisons (7) comportent de nombreuses percées (8) et dont le bout (20) est fermé et en partie rempli d'un enchevêtrement de matériaux à filtre, caractérisé par le fait que les matériaux à filtre comporte plusieurs paquets de céramique (9), les paquets de céramique (9) étant des tuyaux tissés, faits de fils de céramique très fins (12') et enroulés à partir d'un bout et qui sont accompagnés d'un fil thermique résistant (13), la longueur des mailles du tuyau (22) étant d'environ 4,5 mm et dont la division est d'environ 5 mm.

2. Dispositif selon la revendication 1, caractérisé par le fait que le réservoir (3) et le corps creux (4) sont disposés les uns par rapport aux autres de manière concentrique, le corps creux (4) ayant une double cloison destinée à intégrer les paquets en céramique (9).

3. Dispositif selon la revendication 1, caractérisé par le fait que le manchon d'entrée du gaz (5) est disposé de manière concentrique par rapport au réservoir (3).

4. Dispositif selon la revendication 1, caractérisé par le fait que les paquets de céramique enroulés (9) sont serrés avec 2 kg par cm² de sorte que le poids de la céramique des paquets de céramique (9) disposés sur une longueur de 500 mm, avec un diamètre intérieur de 38 mm du corps creux (4) est de 850 kg.

5. Dispositif selon la revendication 1, caractérisé par le fait que les fils de céramique utilisés pour le tissage (12') se composent de filaments de céramique (12') très fins par exemple 6 µ, le fil (12) dont le diamètre est d'environ 1 mm, étant texturé et retordu.

6. Dispositif selon la revendication 1, caractérisé par le fait que les mailles du tuyau tissé (22) comporte une jonction droite -gauche.

7. Dispositif selon la revendication 1 et 5, caractérisé par le fait que la composition chimique du matériau à filtre est de :
- 93,5 %≦SiO₂
- 4,0 % = Al₂O₃
- 0,8% ≧Na₂O

8. Dispositif selon la revendication 1, caractérisé par le fait que le fil thermorésistant est en acier V 4A.

9. Dispositif selon une des revendications précédentes, caractérisé par le fait que le tissage en céramique thermorésistant a une thermorésistance allant jusqu'à 1200 C°.

10. Dispositif selon la revendication 1, caractérisé par le fait que l'additif est ferrugineux et qu'il réduit la température de combustion de 300 'e0 350 C°.

11. Dispositif selon la revendication 11, caractérisé par le fait que l'additif est amené au carburant (diesel) au moyen d'un dispositif de pompe (12).

12. Dispositif selon la revendication 11, caractérisé par le fait que le dispositif de pompe (12) est commandé électroniquement.

13. Dispositif selon la revendication 1, caractérisé par le fait que le corps creux (4) est conçu comme filtre enfichable.

14. Procédé destiné à la fabrication des paquets de céramique (9) selon la revendication 1, caractérisée par le fait qu'est tiré par un bout (23) du tuyau tissé (22) un fil d'une épaisseur d'env. 4 mm (15) nanti de nombreuses barbes qui sont verrouillées dans un enchevêtrement et que le fil (15) est enroulé autour de son axe longitudinal avec un moteur (24) jusqu'à ce que le tuyau tissé (22) soit enroulé.

15. Procédé selon la revendication 14, caractérisé par le fait que les barbes (19) comportent respectivement une charnière (25) à leur bout.

16. Procédé destiné au remplissage d'un corps creux (4) avec des paquets de céramique (9), caractérisée par le fait que les paquets de céramique (9) faits de tuyaux tissés enroulés (22) et constitués de fils en céramique (12') accompagnés d'un fil thermorésistant (13) soient placés dans le corps creux (4) et serrés à l'aide d'un poinçon (23) avec 2 kg par cm², de telle sorte que le poids de céramique des paquets de céramique (9) disposé sur une longueur de 500 mm, avec un diamètre intérieur de 38 mm du corps creux (4) est de 850 kg.
